# EUROPEAN PATENT SPECIFICATION

(11) **EP 2 629 069 B1**
(45) Date of publication and mention of the grant of the patent: **18.03.2015**
(21) Application number: 13155383.6
(22) Date of filing: 15.02.2013
(51) Int. Cl.: G01G 3/14, G01G 19/08, A01G 23/00

(54) **Forest vehicle with apparatus for weighing payload**
Waldfahrzeug mit Einrichtung zum Wägen von Nutzlasten
Véhicule de forêt avec dispositif de pesage de charge

(30) Priority: 17.02.2012 SE 1250131
(43) Date of publication of application: 21.08.2013
(73) Proprietor: Eco Log Sweden AB, 826 22 Söderhamn (SE)
(72) Inventor: Arvidsson, Hans, 770 13 GRANGÄRDE (SE); Nilsson, Johan, 806 35 GÄVLE (SE)
(74) Representative: Engdahl, Stefan

(56) References cited:
- US-A- 6 118 083
- US-A1- 2009 266 620

## Description

The present invention relates to a forest machine for transport of payload in forest terrain, comprising a frame on which a payload holding device is mountable, which is adapted to hold the payload, a drive unit for driving the forest machine, at least six wheels of which at least four are arranged in form of a bogie comprising two bogie arms, which each carries two or more rotatable wheels, are positioned on each side of the forest machine with a longitudinal axis in the driving direction of the forest machine and are via a pivot joint pivotal connected to the frame in an area between the at least two wheels, a payload weighing device for detecting the weight of the payload on the forest machine which comprises at least one deflection gauge attached on a surface of at least one of the bogie arms for detecting the magnitude of a deflection of the bogie arm due to loading of the same with the payload on the forest machine, and a signal processing unit, which is in communication with the deflection gauge for transforming of the measure signal to a corresponding weight indication.

The invention also relates to a method for payload weighing of payloads on a forest machine.

### Background of the invention

Within the forestry branch ever increasing demands is coming that the forest raw materials, which are transported out from the woods by forest machines, normally so called forwarders, should be able to be weighed, partly to be able to produce felling and delivery reports of the material that is taken out from the wood, partly also to ensure that the forest machines at each and every transport out from the wood carry as much payload as possible but without for that sake run the risk of overloading the machine. Therefore, several different types of weighing systems for weighing of payloads on forest machines have been developed.

At one type of weighing system for forest machines, the weighing is performed in a crane which is mounted on the forest machine and which is used for loading of the material that are to be transported on the payload carrier or payload holding device, in that each bundle which is loaded by means of the crane is weighed, e.g. by pressure sensors in the hydraulic system and the weight of all the bundles are thereafter added to obtain the total payload weight on the forest machine. However, such a weighing system has large disadvantages since the work with the crane causes dynamic forces and pressure oscillations in the hydraulic system which has to effect that it can be difficult to achieve a correct value of the real weight as long as the crane is in motion. In case the crane alternatively is stopped and is held completely immovable during the weighing, the loading will on the other hand take longer time which is unfavourable since it increases the time expenditure at the loading.

At another known weighing system for forest machines, so called load cells are mounted on the horizontal load crossbeams onto which round logs normally are laid on the forest machine. Such load cells consist of a strong steel beam which is provided with a deflection sensor, for example a strain gauge, and the steel beams are attached to the load crossbeams such that the upper surfaces of the steel beams are located a distance above the upper surfaces of the load crossbeams and such that the wood during the transportation will rest on the steel beams of the load cells. More precisely, the steel beams are attached to the load crossbeams in two points in the very outermost ends of these and hereby it is, by means of the strain gauges, possible to measure the deflection of the steel beams of the load cells as a result of the weight of the wood that is placed onto the steel beams and, since the deflection is proportional to the weight, achieve a measure of the payload weight. It would not be possible to position the deflection sensors directly onto the regular load crossbeams of the forest machine since these normally are supported in several, normally between four to six, bearing points on the forest machine and therefore forms a static indefinite structure which makes it complicated to achieve a correct value of the weight of the payload that is supported on each load crossbeam. An obvious disadvantage with a weighing system that utilizes such load cells is that these, as a consequence of the strong steel beams, in their selves will have a considerable weight, which will increase the dead weight of the forest machine and thereby lower its payload capacity. Moreover, forest machines have been developed recently which are provided with load crossbeams whose width can be varied depending on the terrain and the type of forest stand where the forest machine is to be driven. Such load crossbeams cannot be combined with load cells of the type described above. Neither is it possible to weigh other types of payloads than round logs with such a weighing system, for example in case the forest machine would be provided with a payload holding device in form of a container for transport of e.g. chips or cutting residuals in form of stumps and branches, since in that case the weighing will be incorrect.

A third previously known weighing system for forest machines is based on payload holding devices, which are hydraulically suspended in that the payload holding device, including for example horizontal load crossbeams and vertical stakes, are supported by hydraulic cylinders. By means of such a payload holding device the weight of the payload can be measured by measuring the hydraulic pressure in the supporting cylinders. However, such a weighing system becomes complicated and expensive and in addition the total weight of the whole payload holding device becomes so large that it considerably decreases the total payload capacity of the forest machine. There are examples of such payload holding devices whose weight is so large that the total payload capacity of the forest machine decreases with up to 10%, which naturally increases the transportation costs considerably as a consequence of decreasing payload.

Through US 2009/0266620 it is previously known a method and a load weighing device for payload weighing on a transport vehicle. The transport vehicle is a so called dumper or truck, which can be used in e.g. mines, stone-quarries or in excavation sites for moving excavation masses. To facilitate for the vehicle to drive in steep and rough terrain it is provided with large wheels, of which at least four are arranged in a wheel bogie including two opposite bogie arms, which are pivotally mounted on the respective sides of the vehicle and in the respective ends of which the wheels are rotatably journalled. The load weighing device includes deflection sensors, for example strain gauges, which are attached on the vertical side surfaces of the bogie arms. To improve the measuring accuracy and compensate for transverse forces acting on the bogie arms, as a consequence of e.g. driving on ground which is inclined in the transverse direction of the vehicle or when driving in curves, two deflection sensors are arranged opposite each other on the respective side surface of each bogie arm and, by comparing the measured values for the both opposite positioned deflection sensors, a more accurate measure value can be achieved for the weight of the payload carried by the vehicle.

One disadvantage with a measuring device formed in this way is that the deflection sensors must be positioned on the vertical side surfaces of the bogie arms, which lead to that the deflection sensors will have an exposed position and run the risk of being hit by a subject or material being thrown up by the wheels when driving the vehicle. In particular, this is the case if the payload weighing device should be mounted onto a forest machine, just as the present invention is directed towards, where branches, stem parts and projecting stumps or stones may hit and damage the deflection sensors. Another disadvantage is that at least two separate deflection sensors have to be arranged on each bogie arm which causes double sensor housing, double mounting work and double wire laying leading to increased costs.

### Summary of the invention

The object of the present invention is to eliminate problems and disadvantages with previously known payload weighing devices for forest machines and to provide a forest machine, which is equipped with a payload weighing device which is comparably uncomplicated and inexpensive to produce and mount on a forest machine and gives an acceptable high accuracy of measurement. At least this object is achieved by a forest machine according to claim 1.

The invention also relates to a method for payload weighing of payload on a forest machine having essentially the same object as above. At least this object is achieved by a method according to claim 14.

Accordingly, the basis of the invention is the insight that the above object can be achieved by a forest machine, which is provided with a payload weighing device which comprises at least one deformation or deflection gauge that is attached to at least one bogie arm forming part of a wheel bogie comprising two opposed bogie arms and at least four wheels, wherein each bogie arm carries two or more wheels. The deflection gauge is moreover attached on the bogie arm in such way that it measures the deflection of the bogie arm in a direction having an angle of between 20-70°, preferably 30-60°, in relation to a longitudinal axis of the bogie arm, wherein the longitudinal axis is defined in the horizontal plane by an imaginary line in the longitudinal direction of the bogie arm perpendicular to the pivotal axis of the pivot joint between the bogie arm and the chassis of the forest machine, and in the vertical plane by an imaginary line which extends through the rotary centre of the respective wheel of the bogie arm and the pivot axis of the pivot joint.

The reason why the deflection is measured in such an angle in relation to the longitudinal axis of the bogie arm, is that during development of the present invention it has appeared that the deflection is particular large in such a direction, which has to result that also the measure signal from the deflection gauge becomes comparatively large and thereby also the resolution/sensitivity such that it becomes possible to achieve a large accuracy of the weight of the payload. The reason why the deflection becomes particularly large in such an angle in relation to the longitudinal axis of the bogie arm is that the bogie arm in the area between the pivot joint and one of the wheels is subjected on the one hand to a bending moment in the longitudinal direction of the bogie arm, on the other hand to a twisting or torsional moment as a consequence of that there is a perpendicular distance between the resultant reaction force acting on the wheel from the ground and the centre of the moment of inertia of the bogie arm, as will be more closely illustrated and described in the following exemplary embodiment. This means that the maximum deflection of the bogie arm as a consequence of this combined bending and twisting moment normally will be directed somewhere within an angle of 20-70°, in most cases within an angle of 30-60°, in relation to the longitudinal axis of the bogie arm. It is evident that the largest measured value, and thereby the best accuracy, is achieved if the deflection sensor of the deflection gauge is positioned in a direction which as close as possible corresponds to the expected direction for the maximum deflection of the bogie arm, but small deviations of about +/-10° from this direction has normally only marginal influence on the measurement result. The exact direction of the maximum deflection of the bogie arm varies between different types of machines and is dependant inter alia of the geometry of the machine and the bogie arm, the material thicknesses of the bogie arm and the like and can preferably be calculated and/or measured for each type of machine prior to mounting of the deflection gauge.

Within the scope of this general inventive idea the invention can be varied within wide boundaries. A bogie arm may have a homogeneous cross section, for example a profiled cross section, but normally it has a box formed cross section with boundary walls which define an internal cavity and the deflection gauge may then be positioned on the outside of the bogie arm or within the cavity on any optional boundary wall. In the last mentioned case the deflection gauge will be positioned well protected from influence from the outside but the mounting will on the other hand be more difficult. In case the deflection gauge is mounted on the outside of the bogie arm, it is preferred that it is positioned on its upper side to be best protected during operation of the machine.

The deflection gauge comprises at least one deflection sensor. According to the invention different types of deflection sensors may be used. Normally, so called strain gauges are preferred but also other types could be conceivable, such as piezo-electric sensors or deflection sensors utilizing laser measuring. In a hereinafter illustrated and described embodiment, the deflection gauge is provided with two deflection sensors of the type strain gauge. The two deflection sensors are positioned in parallel to each other and are electrically connected to each other by a bridge connection, which also comprises two temperature sensors which allows for compensation for deflection caused by temperature variation in the bogie arm in order to improve the measurement accuracy at different operational conditions. However, the deflection gauge could be formed in many other ways within the scope of the following claims. For example, it could contain more than two or only one deflection sensor, be completely without or only have one temperature sensor, not be bridge connected or the two deflection sensors could have an angle, e.g. 90°, in relation to each other instead of being parallel.

Attaching a deflection gauge on only one of the bogie arms of a wheel bogie can be sufficient in such cases when the demands on measurement accuracy are not so high and the payload can be expected to be positioned symmetrically and with the gravity centre positioned at approximately the same place at every loading occasion. Hereby, an estimation can be made of the weight of the payload by a proportionality calculation of how large part of the payload that is carried by the one or more other bogie arms and/or wheel shafts. The advantage with such an embodiment is that the costs for the payload weighing device will be low.

To improve the measurement accuracy it is however advantageous if both of the bogie arms in a wheel bogie is provided with a deflection gauge. For forest machines having only one wheel bogie, this is placed at the back in the area below the payload holding device. At the front the forest machine can be provided with a single pair of wheels. In order to improve the measurement accuracy further, such a forest machine according to the invention could be provided with a deflection gauge also at the forward wheels, e.g. by positioning the deflection gauge on a shaft interconnecting the wheels. A forest machine may however also have more than two wheel bogies and it is within the scope of the invention to position deflection gauges on all or on an optional number of the bogie arms of the forest machine. If deflection gauges are positioned at all of the wheels of the forest machine, i.e. on all of the bogie arms and where appropriate also on a wheel shaft of a single pair of wheels, the weight can be obtained by addition of the signals from all of the deflection gauges. If, on the other hand, the deflection gauges are positioned at only some of the wheels, the weight must be estimated by a proportionality calculation of how the payload is distributed on the bogie arms and/or the wheel shafts.

The payload weighing device according to the invention does not to any appreciable extent increase the dead weight of the forest machine and is flexible since on one and the same forest machine according to the invention, widely different types of payload holding devices can be attached and still achieve a correct weight measurement. As example on different types of payload holding devices can be mentioned load crossbeams and load stakes for transport of stem parts, also of the type that are adjustable in width and length, payload holding devices in form of e.g. containers for transport of chips and/or cutting residuals, clamping beams for transport of entire stems, or optional other types of payload holding devices for terrain transport of also other materials than forest raw materials.

Transmission of the measurement signals from respective deflection gauge to a signal processing unit can be performed in different ways, such as electric, optic or wireless transmission. After processing of the measurement signals from the one or more deflection gauges in a signal processing unit and receiving of a weight indication, the weight indication can be used in different ways in dependence of the purpose with the weighing. In one embodiment some form of presentation unit can be provided, such as e.g. a display or a sound or light signal unit, which is positioned at the driver's seat for presenting of the existing payload weight for the driver and/or to make the driver observant on that the maximum permitted payload weight has been reached or is on the way to be reached and thereby prevent driving with overload. The measurement data can however be stored in a storing unit in the machine and/or be transmitted wireless to any data receiving centre, also without letting the driver take notice of this through any presentation unit, e.g. for recording the quantity of forest raw material that is transported out from a forest stand during a certain time period. Different combinations of these applications of the measurement data are possible within the scope of the invention.

It should be understood that additional alternative embodiments of the invention are possible. For example, to attach two or more deflection gauges on one and the same bogie arm for increasing the reliability and/or the measurement accuracy. The deflection gauges may also be positioned differently on the respective bogie arm than as is illustrated in the following exemplary embodiment, e.g. to attach the deflection gauges essentially in the middle of the respective bogie arm at the area of its pivot joint or on the inside, outside or the bottom side of the bogie arm. The forest machine illustrated and described in the following exemplary embodiment is formed with wheel bogies which each have four wheels, which are positioned in pairs on two opposite bogie arms. This is the most frequent occurring type of wheel bogie, but it should be understood that the invention can be realized also on forest machines which are provided with more than two wheels on the respective bogie arm.

### Brief description of the drawings

An embodiment of a forest machine according to the invention will hereinafter be described with reference to the drawings. The drawings show in:
- Fig 1: a perspective view of a forest machine according to the invention, for transport of forest raw material, which is provided with a payload holding device and on this a payload of round logs;
- Fig 2: a perspective view of the forest machine according to Fig. 1 with the payload holding device and parts of the frame removed to make the wheel bogies of the forest machine visible;
- Fig 3: a side view of a bogie arm with two wheels which are indicated with broken lines;
- Fig 4: a view from the front of a wheel and its bogie arm;
- Fig 5: a view from above of the bogie arm according to Fig. 3;
- Fig 6: a view from above of a deflection gauge with a cover removed; and
- Fig 7: an electric circuit diagram for bridge connection of the incorporated components of the deflection gauge.

### Detailed description of an embodiment of the invention

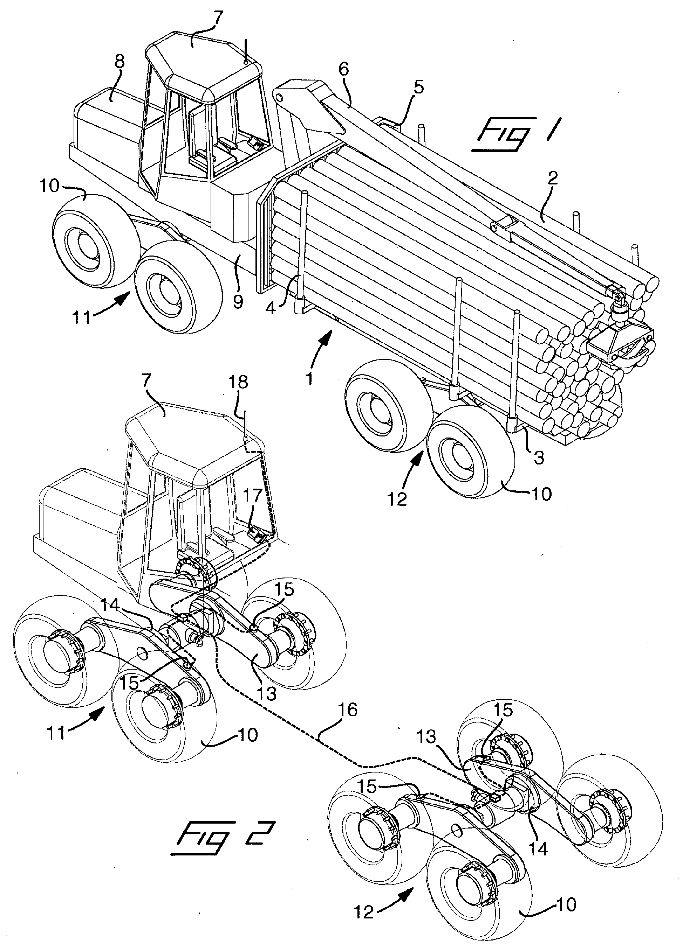

An embodiment of the invention will hereinafter be described with reference to the drawings. Of these, Fig.1 illustrates a perspective view of a forest machine, a so called forwarder, for transportation in terrain of forest raw material. The illustrated forest machine is equipped with a payload holding device 1 for transport of round logs 2 and more precisely the payload holding device comprises horizontal load crossbeams 3, vertical stakes 4 and a forward gate 5 for carrying a payload of round logs 2, as is shown in the figure. The forest machine is moreover provided with a crane 6 for loading and unloading of wood, a driver's cabin 7 and a drive unit 8 in form of for example a diesel motor for driving the machine and operating the crane. The different parts of the forest machine are mounted on and carried by a body or frame 9, which is divided in a front part and a rear part which, in a commonly known way, are articulated through a not shown articulated joint at the area between the cabin 7 and the gate 5. Consequently, the forest machine has an articulated frame steering.

The illustrated forest machine is provided with eight wheels 10, which are mounted on a front and a rear wheel bogie 11 and 12, respectively. These are best seen in Fig. 2 from which parts of the forest machine's frame 9 and payload holding device 1 are removed. The front wheel bogie 11 is positioned in the area beneath the driver's cabin 7, while the rear wheel bogie 12 is positioned beneath the payload holding device 1, and each comprises four wheels 10, which are rotatably mounted in pairs at the ends of two opposed bogie arms 13, which in their turn are pivotally journalled in a plane in parallel with the forest machine's driving direction by way of a pivot joint 14 on opposite sides of the frame 9. In the illustrated embodiment the pivot joint is disposed in the middle of the respective bogie arm, which is most commonly for forest machines.

In the illustrated embodiment, each of the bogie arms 13 are provided with a deflection gauge 15, which is mounted on the upper side of the respective bogie arm in the area between the pivot joint 14 and one of the wheels 10. By means of the deflection gauges 15 deflections, which are caused by the dead weight and the payload, can be detected at each of the bogie arms 13. All the deflection gauges 15 are connected, via schematically illustrated electric wires 16, to a combined signal processing and presentation unit 17, which is positioned in the driver's cabin. By means of the electric wires 16 the deflection gauges deliver electric signals to the signal processing and presentation unit 17 which are proportional to the deflection in the respective bogie arm and accordingly also proportional to the payload carried by the respective bogie arm. The electric signals are thereafter processed and added together in the signal processing and presentation unit 17 to obtain a weight of the payload carried by the forest machine. The weight values may optionally as desired be stored in the signal processing and presentation unit 17, or in any other suitable storing unit, be shown for the driver on a display on the same and/or be wireless transmitted via an antenna 18 to a data receiving unit.

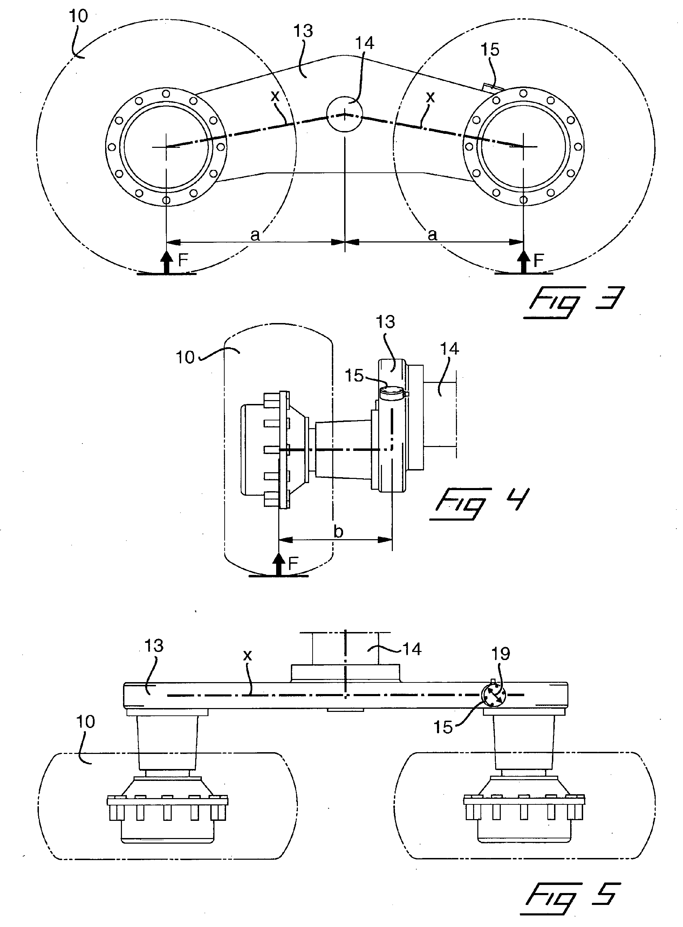

According to the invention, the deflection gauge measures the deflection in an angle of 20-70°, preferably 30-60°, in relation to an imaginary longitudinal axis x through the bogie arm 13. The reason why the deflection is measured in such an angle and not in parallel to the longitudinal axis of the bogie arm is that the deflection of the bogie arm normally is as largest in a direction within these angles. The reason for this is that the upward directed reaction force F on the respective wheel 10, not only gives rise to a bending moment in the longitudinal direction of the bogie arm, by way of a torque arm a between the rotational axis of the wheel 10 and the pivot axis of the pivot joint 14 according to Fig.3, but also a twisting or torsional moment by way of a torque arm b between the wheel 10 and the centre of the mass moment of inertia of the bogie arm 13, as is illustrated in Fig. 4. The resulting bending/twisting of the bogie arm as a consequence of the combination of the bending and twisting moments causes a deflection of the bogie arm, which has its largest value within an angle of 20-70°, normally within 30-60°, in relation to the longitudinal axis x of the bogie arm.

The longitudinal axis x of the bogie arm is defined in the vertical plane as an imaginary, straight line that connects the rotary axis of each of the wheels 10 with the pivot axis of the pivot joint 14, as is illustrated in Fig. 3. In many cases, and so also in this embodiment, the bogie arms are somewhat V-shaped such that the pivot axis of the pivot joint is positioned somewhat higher in relation to the rotary axis of the wheels, which has to consequence that also the longitudinal axis obtains a V-shaped angled form in the vertical plane. In the horizontal plane, the longitudinal axis x is defined as an imaginary, straight line in the longitudinal direction and perpendicular to the pivot axis of the pivot joint, as is illustrated in Fig. 5. The bidirectional arrow 19, which is shown on the deflection gauge 15, illustrates the direction in which the deflection of the bogie arm is measured.

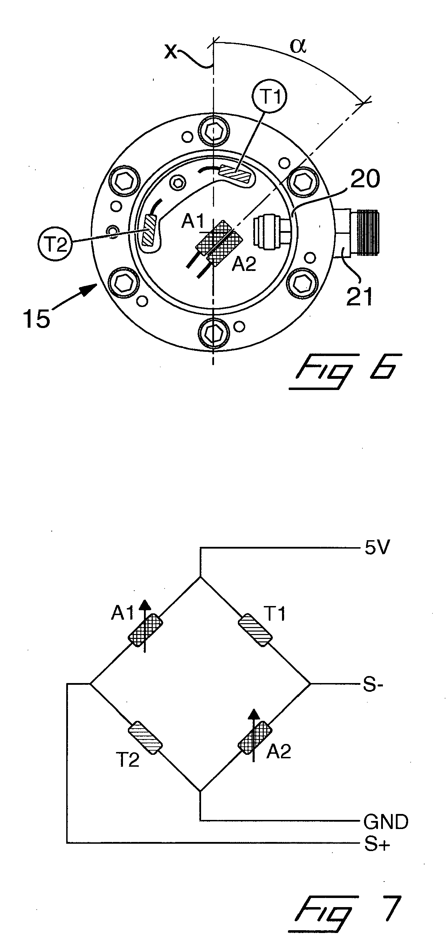

In Fig. 6 is shown an enlarged view from above of a deflection gauge 15, from which a not shown outer cover is removed such that the electric components that are included in the deflection gauge are visible. The deflection gauge comprises a protecting housing which, in addition to the cover, is comprised of a flanged sleeve 20, which lacks any bottom and which is screwed and glued against the surface of the bogie arm where the deflection gauge are to be mounted, in order to obtain a moisture and dust tight space for the electric components. By 21 is indicated a tubular cable entry through the housing. In the illustrated embodiment the deflection gauge is provided with two temperature sensors T1, T2 as well as two deflection sensors A1, A2 in form of strain gauges, which are positioned in parallel to each other. The temperature sensors T1, T2 may be located in an optional position within the housing and they have the purpose of detecting the temperature in the material of the bogie arm. The strain gauges A1, A2, on the other hand, has the purpose of detecting the deflection, i.e. the compression or the extension of the material of the bogie arm, and therefore it is important that they are oriented in the direction in relation to the longitudinal direction of the bogie arm in which it is desirable to measure the deflection, i.e. in or close to the direction in which the largest deflections normally appears. The angle α between the longitudinal axis x of the bogie arm and the measuring direction of the strain gauges A1, A2 is in the illustrated embodiment about 45° and will according to the invention be between 20-70°, preferably between 30-60°. To be able to detect the deflection in the material of the bogie arm it is also important that the strain gauges are fixated towards the material of the bogie arm, which is the reason why the housing lacks a bottom. In the illustrated embodiment the strain gauges are glued directly towards the surface of the bogie arm by means of a suitable adhesive. It should however be possible to e.g. attach two opposite flanges by means of screwing and/or gluing towards the material of the bogie arm between which the strain gauges are strained fixated in any suitable way.

In Fig. 7 is illustrated an electric circuit diagram for bridge connection of the components of the deflection gauge. The bridge is a so called Wheat-stone-bridge at which a voltage is applied to the bridge between the points 5V and GND, while a signal processing unit is connected between S+ and S-. The strain gauges A1 and A2 are so located in the bridge that their values will be added to each other, which makes the signal to the signal processing unit about twice as large in relation to if only one strain gauge had been used and by this the resolution/sensitivity is increased such that also the measurement accuracy can be increased.

## Claims

1. Forest machine for transport of payload in forest terrain, comprising a frame (9) on which a payload holding device (3, 4) is mountable, which is adapted to hold the payload (2), a drive unit (8) for driving the forest machine, at least six wheels (10) of which at least four are arranged in form of a bogie (11, 12) comprising two bogie arms (13), which each carries two or more rotatable wheels, are positioned on each side of the forest machine with a longitudinal axis in the driving direction of the forest machine and are via a pivot joint (14) pivotal connected to the frame in an area between the at least two wheels, a payload weighing device for detecting the weight of the payload on the forest machine which comprises at least one deflection gauge (15) attached on a surface of at least one of the bogie arms for detecting the magnitude of a deflection of the bogie arm due to loading of the same with the payload on the forest machine, and a signal processing unit (17), which is in communication with the deflection gauge for transforming of the measure signal to a corresponding weight indication, **characterized in that** the deflection gauge (15) is attached such that it measures the deflection of the bogie arm (13) in an angle (α) of between 20-70° in relation to a longitudinal axis (x) of the bogie arm which in a horizontal plane is defined by an imaginary line in the longitudinal direction of the bogie arm perpendicular to the pivot axis of the pivot joint (14) and in a vertical plane by an imaginary line extending through the respective rotary axis of the wheels (10) of the bogie arm and the pivot axis of the pivot joint.

2. Forest machine according to claim 1, **characterized in that** the bogie arm (13) has a hollow shell shape with surrounding walls, which define an inner cavity.

3. Forest machine according to claim 2, **characterized in that** the deflection gauge (15) is attached on the outside or inside of an upper or a lower confining wall of the bogie arm (13).

4. Forest machine according to any of the preceding claims, **characterized in that** the deflection gauge (15) is attached on the upper, outer side of the bogie arm (13).

5. Forest machine according to any of the preceding claims, **characterized in that** the deflection gauge (15) is attached in a position between the pivot joint (14) and one of the wheels (10).

6. Forest machine according to any of the preceding claims, **characterized in that** the deflection gauge (15) comprises two bridge connected deflection sensors (A1, A2).

7. Forest machine according to claim 6, **characterized in that** the bridge connected deflection sensors (A1, A2) of the deflection gauge (15) are positioned in parallel to each other such that they measure the deflection of the bogie arm in parallel directions.

8. Forest machine according to claim 6 or 7, **characterized in that** the bridge connection also comprises temperature sensors (T1, T2).

9. Forest machine according to any of the claims 6-8, **characterized in that** the measure signals from the two deflection sensors (A1, A2) are added to each other by means of the bridge connection such that the sensitivity of the deflection gauge (15) is increased.

10. Forest machine according to any of the preceding claims, **characterized in that** at least one deflection gauge (15) is attached on each of at least two opposite bogie arms (13).

11. Forest machine according to any of the preceding claims, **characterized in that** the forest machine comprises a rear bogie (12) including at least four wheels (10), which are rotatably mounted on two opposite bogie arms (13), and a forward pair of wheels connected via a forward shaft, wherein deflection gauges (15) are attached on each of the bogie arms as well as on the forward shaft.

12. Forest machine according to any of the claims 1-10, **characterized in that** the forest machine comprises a rear bogie (12) including at least four wheels (10), which are rotatably mounted on two opposite bogie arms (13), as well as a forward bogie (11) which likewise includes at least four wheels (10), which are rotatably mounted on two opposite bogie arms (13), wherein deflection gauges (15) are attached on all four bogie arms.

13. Forest machine according to any of the preceding claims, **characterized in that** the deflection gauge (15) is attached such that it measures the deflection of the bogie arm (13) in an angle (α) of between 30-60° in relation to a longitudinal axis (x) of the bogie arm.

14. Method for payload weighing of a payload on a forest machine of the kind comprising a frame (9) on which a payload holding device (3, 4) is mountable, which is adapted to hold the payload (2), a drive unit (8) for driving the forest machine, at least six wheels (10) of which at least four are arranged in form of a bogie (11, 12) comprising two bogie arms (13), which each carries two or more rotatable wheels, are positioned on each side of the forest machine with a longitudinal axis in the driving direction of the forest machine and are pivotally attached to the frame via a pivot joint (14) in an area between the at least two wheels, **characterized by** the step to attach a deflection gauge (15) on at least one of the bogie arms (13) such that it measures the deflection of the bogie arm in an angle (α) of between 20-70° in relation to a longitudinal axis (x) of the bogie arm which in a horizontal plane is defined by an imaginary line in the longitudinal direction of the bogie arm perpendicular to the pivot axis of the pivot joint (14) and in a vertical plane by an imaginary line which extends through the respective rotary axis of the wheels (10) of the bogie arm and the pivot axis of the pivot joint.

## Patentansprüche

1. Waldmaschine zum Transport von Nutzlast im Waldgebiet, umfassend einen Rahmen (9), auf welchem eine Nutzlasthaltevorrichtung (3, 4) befestigbar ist, welche ausgelegt ist, um die Nutzlast (2) zu halten, eine Antriebseinheit (8) zum Fahren der Waldmaschine, wobei wenigstens sechs Räder (10), von denen wenigstens vier in der Form eines Drehgestells (11, 12) angeordnet sind, welches zwei Drehgestellarme (13) aufweist, die jeweils zwei oder mehrere drehbare Räder tragen, auf jeder Seite der Waldmaschine mit einer Längsachse in der Fahrtrichtung der Waldmaschine positioniert sind und über ein Drehgelenk (14) drehbar mit dem Rahmen in einem Bereich zwischen den wenigstens zwei Rädern verbunden sind, eine Nutzlastwiegevorrichtung zum Erfassen des Gewichts der Nutzlast auf der Waldmaschine, welche wenigstens ein Durchbiegungsmessgerät (15), das auf einer Oberfläche wenigstens einer der Drehgestellarme angebracht ist, zum Erfassen der Größenordnung einer Durchbiegung des Drehgestellarms auf Grund der Beladung desselben mit der Nutzlast auf der Waldmaschine umfasst, und eine Signalverarbeitungseinheit (17), welche in Verbindung mit dem Durchbiegungsmessgerät steht, zum Umwandeln des Messsignals in eine entsprechende Gewichtskennzeichnung, **dadurch gekennzeichnet, dass** das Durchbiegungsmessgerät (15) so angebracht ist, dass es die Durchbiegung des Drehgestellarms (13) in einem Winkel (α) von zwischen 20-70° in Bezug auf eine Längsachse (x) des Drehgestellarms misst, welche in einer horizontalen Ebene durch eine gedachte Linie in der Längsrichtung des Drehgestellarms senkrecht zur Drehachse des Drehgelenks (14) und in einer vertikalen Ebene durch eine gedachte Linie definiert ist, die sich durch die jeweilige Drehachse der Räder (10) des Drehgestellarms und der Drehachse des Drehgelenks erstreckt.

2. Waldmaschine nach Anspruch 1, **dadurch gekennzeichnet, dass** der Drehgestellarm (13) eine hohle Schalenform mit umgebenden Wänden aufweist, welche eine innere Aushöhlung definieren.

3. Waldmaschine nach Anspruch 2, **dadurch gekennzeichnet, dass** das Durchbiegungsmessgerät (15) auf der Außenseite oder Innenseite einer oberen oder einer unteren Begrenzungswand des Drehgestellarms (13) angebracht ist.

4. Waldmaschine nach jedem beliebigen der vorangehenden Ansprüche, **dadurch gekennzeichnet, dass** das Durchbiegungsmessgerät (15) auf der oberen, äußeren Seite des Drehgestellarms (13) angebracht ist.

5. Waldmaschine nach jedem beliebigen der vorangehenden Ansprüche, **dadurch gekennzeichnet, dass** das Durchbiegungsmessgerät (15) in einer Position zwischen dem Drehgelenk (14) und einem der Räder (10) angebracht ist.

6. Waldmaschine nach jedem beliebigen der vorangehenden Ansprüche, **dadurch gekennzeichnet, dass** das Durchbiegungsmessgerät (15) zwei brückenmäßig verbundene Durchbiegungssensoren (A1, A2) umfasst.

7. Waldmaschine nach Anspruch 6, **dadurch gekennzeichnet, dass** die brückenmäßig verbundenen Durchbiegungssensoren (A1, A2) des Durchbiegungsmessgeräts (15) parallel zueinander positioniert sind, so dass sie die Durchbiegung des Drehgestellarms in parallelen Richtungen messen.

8. Waldmaschine nach Anspruch 6 oder 7, **dadurch gekennzeichnet, dass** die Brückenverbindung auch Temperatursensoren (T1, T2) umfasst.

9. Waldmaschine nach jedem beliebigen der Ansprüche 6-8, **dadurch gekennzeichnet, dass** die Messsignsale von den zwei Durchbiegungssensoren (A1, A2) mittels der Brückenverbindung miteinander zusammengezählt werden, so dass die Empfindlichkeit des Durchbiegungsmessgeräts (15) erhöht wird.

10. Waldmaschine nach jedem beliebigen der vorangehenden Ansprüche, **dadurch gekennzeichnet, dass** wenigstens ein Durchbiegungsmessgerät (15) an jedem der wenigstens zwei gegenüber liegenden Drehgestellarmen (13) angebracht ist.

11. Waldmaschine nach jedem beliebigen der vorangehenden Ansprüche, **dadurch gekennzeichnet, dass** die Waldmaschine ein hinteres Drehgestell (12) umfasst, welches wenigstens vier Räder (10), die drehbar auf zwei gegenüber liegenden Drehgestellarmen (13) angebracht sind, und ein vorderes Paar Räder aufweist, die über eine Vorwärtswelle verbunden sind, wobei die Durchbiegungsmessgeräte (15) auf jedem der Drehgestellarme als auch auf der Vorwärtswelle angebracht sind.

12. Waldmaschine nach jedem beliebigen der Ansprüche 1-10, **dadurch gekennzeichnet, dass** die Waldmaschine ein hinteres Drehgestell (12), welches wenigstens vier Räder (10) aufweist, die drehbar auf zwei gegenüber liegenden Drehgestellarmen (13) angebracht sind, als auch ein vorderes Drehgestell (11) umfasst, welches ebenfalls wenigstens vier Räder (10) aufweist, die drehbar auf zwei gegenüber liegenden Drehgestellarmen (13) angebracht sind, wobei Durchbiegungsmessgeräte (15) auf allen vier Drehgestellarmen angebracht sind.

13. Waldmaschine nach jedem beliebigen der vorangehenden Ansprüche, **dadurch gekennzeichnet, dass** das Durchbiegungsmessgerät (15) so angebracht ist, dass es die Durchbiegung des Drehgestellarms (13) in einem Winkel (α) von zwischen 30-60° in Bezug auf eine Längsachse (x) des Drehgestellarms misst.

14. Verfahren zum Nutzlastabwiegen einer Nutzlast auf einer Waldmaschine der Art, welche einen Rahmen (9), auch welchem eine Nutzlasthaltevorrichtung (3, 4) befestigbar ist, welche ausgelegt ist, um die Nutzlast (2) zu halten, eine Antriebseinheit (8) zum Fahren der Waldmaschine, wobei wenigstens sechs Räder (10), von denen wenigstens vier in der Form eines Drehgestells (11, 12) angeordnet sind, welches zwei Drehgestellarme (13) aufweist, die jeweils zwei oder mehrere drehbare Räder tragen, auf jeder Seite der Waldmaschine mit einer Längsachse in der Fahrtrichtung der Waldmaschine positioniert sind und über ein Drehgelenk (14) drehbar mit dem Rahmen in einem Bereich zwischen den wenigstens zwei Rädern verbunden sind, umfasst, **gekennzeichnet durch** den Schritt des Anbringens eines Durchbiegungsmessgeräts (15) auf wenigstens einem der Drehgestellarme (13), so dass es die Durchbiegung des Drehgestellarms in einem Winkel (α) von zwischen 20-70° in Bezug auf eine Längsachse (x) des Drehgestellarms misst, welche in einer horizontalen Ebene **durch** eine gedachte Linie in der Längsrichtung des Drehgestellarms senkrecht zur Drehachse des Drehgelenks (14) und in einer vertikalen Ebene **durch** eine gedachte Linie definiert ist, die sich **durch** die jeweilige Drehachse der Räder (10) des Drehgestellarms und der Drehachse des Drehgelenks erstreckt.

## Revendications

1. Véhicule de forêt pour le transport d'une charge en terrain forestier, comprenant un châssis (9) sur lequel un dispositif de fixation de charge (3, 4) peut être monté, qui est adapté pour maintenir la charge (2), une unité d'entraînement (8) pour entraîner le véhicule de forêt, au moins six roues (10) dont au moins quatre sont agencées sous la forme d'un bogie (11, 12) comprenant deux bras de bogie (13)dont chacun porte deux ou plusieurs roues, sont disposés de chaque côté du véhicule de forêt avec un axe longitudinal dans le sens de la marche du véhicule de forêt et sont raccordés en pivotement par une articulation à pivot (14) au châssis dans une zone située entre les au moins deux roues, un dispositif de de pesage de charge pour détecter le poids de la charge sur le véhicule de forêt qui comprend au moins un déflectomètre (15) fixé sur une surface d'au moins un des bras de bogie pour détecter l'ordre de grandeur d'une déflexion du bras de bogie due au chargement de celui-ci avec la charge sur le véhicule de forêt et une unité de traitement de signaux (17) qui est en communication avec le déflectomètre pour transformer le signal de mesure en une indication de poids correspondante,**caractérisé en ce que** le déflectomètre (15) est fixé de telle sorte qu'il mesure la déflexion du bras de bogie (13) dans un angle (α) se situant entre 20-70° par rapport à un axe longitudinal (x) du bras de bogie qui dans un plan horizontal est défini par une ligne imaginaire dans la direction longitudinale du bras de bogie perpendiculaire à l'axe de pivotement de l'articulation à pivot (14) et dans un plan vertical par une ligne imaginaire s'étendant à travers l'axe de rotation respectif des roues (10) du bras de bogie et de l'axe de pivotement de l'articulation à pivot.

2. Véhicule de forêt selon la revendication 1 **caractérisé en ce que** le bras de bogie (13) a une forme d'enveloppe creuse avec des parois entourantes qui définissent une cavité intérieure.

3. Véhicule de forêt selon la revendication 2 **caractérisé en ce que** le déflectomètre (15) est fixé à l'extérieur ou à l'intérieur d'une paroi de confinement supérieure ou inférieure du bras de bogie (13).

4. Véhicule de forêt selon l'une quelconque des revendications précédentes **caractérisé en ce que** le déflectomètre (15) est fixé sur le côté extérieur supérieur du bras de bogie (13).

5. Véhicule de forêt selon l'une quelconque des revendications précédentes **caractérisé en ce que** le déflectomètre (15) est fixé dans une position située entre l'articulation à pivot (14) et une des roues (10).

6. Véhicule de forêt selon l'une quelconque des revendications précédentes **caractérisé en ce que** le déflectomètre (15) comprend deux capteurs de déflexion connectés en pont (A1, A2).

7. Véhicule de forêt selon la revendication 6 **caractérisé en ce que** les capteurs de déflexion connectés en pont (A1, A2) du déflectomètre (15) sont positionnés parallèles l'un à l'autre de telle sorte qu'ils mesurent la déflexion du bras de bogie dans des directions parallèles.

8. Véhicule de forêt selon la revendication 6 ou 7 **caractérisé en ce que** la connexion en pont comprend également deux capteurs de température (T1, T2).

9. Véhicule de forêt selon l'une quelconque des revendications 6-8 **caractérisé en ce que** les signaux de mesure des deux capteurs de déflexion (A1, A2) sont ajoutés à chaque autre au moyen de la connexion en pont de telle sorte que la sensibilité du déflectomètre (15) est augmentée.

10. Véhicule de forêt selon l'une quelconque des revendications précédentes **caractérisé en ce qu'**au moins un déflectomètre (15) est fixé à chacun des au moins deux bras de bogie opposés (13).

11. Véhicule de forêt selon l'une quelconque des revendications précédentes **caractérisé en ce que** le véhicule de forêt comprend un bogie arrière (12) comprenant au moins quatre roues (10) qui sont montées pouvant tourner sur deux bras de bogie opposés (13) et une paire avant de roues raccordées par un arbre avant, dans lequel les déflectomètres (15) sont fixés sur chacun des bras de bogie ainsi que sur l'arbre avant.

12. Véhicule de forêt selon l'une quelconque des revendications 1-10 **caractérisé en ce que** le véhicule de forêt comprend un bogie arrière (12) comprenant au moins quatre roues (10) qui sont montées pouvant tourner sur deux bras de bogie (13) opposés ainsi qu'un bogie avant (11) qui comprend de même au moins quatre roues (10) qui sont montées pouvant tourner sur deux bras de bogie opposés (13), dans lequel les déflectomètres (15) sont fixés sur tous les quatre bras de bogie.

13. Véhicule de forêt selon l'une quelconque des revendications précédentes **caractérisé en ce que** le déflectomètre (15) est fixé de telle sorte qu'il mesure la déflexion du bras de bogie (13) dans un angle (α) se situant entre 30-60° en rapport avec un axe longitudinal (x) du bras de bogie.

14. Méthode pour peser une charge d'une charge sur un véhicule de forêt du type comprenant un châssis (9) sur lequel un dispositif de support de charge (3, 4) peut être monté, qui est adapté pour supporter la charge (2), une unité d'entraînement (8) pour entraîner le véhicule de forêt, au moins six roues (10) dont au moins quatre sont agencées sous la forme d'un bogie (11, 12) comprenant deux bras de bogie (13) dont chacun porte deux roues ou plus pouvant tourner, sont positionnés de chaque côté du véhicule de forêt avec un axe longitudinal dans le sens de la marche du véhicule de forêt et sont fixés de manière pivotante au châssis par une articulation à pivot (14) dans une zone située entre les au moins deux roues **caractérisée par** la phase de fixation d'un déflectomètre (15) sur au moins un des bras de bogie (13) de telle sorte qu'il mesure la déflexion du bras de bogie dans un angle (α) se situant entre 20-70° par rapport à un axe longitudinal (x) du bras de bogie lequel dans un plan horizontal est défini par une ligne imaginaire dans le sens longitudinal du bras de bogie perpendiculaire à l'axe de pivotement de l'articulation à pivot (14) et dans un plan vertical par une ligne imaginaire qui s'étend à travers l'axe de rotation respectif des roues (10) du bras de bogie et l'axe de pivotement de l'articulation à pivot.
